# EUROPEAN PATENT APPLICATION

(11) **EP 3 926 123 A1**
(43) Date of publication of application: **22.12.2021**
(21) Application number: 20916236.1
(22) Date of filing: 30.10.2020
(51) Int. Cl.: E04F 21/16

(54) **WALL SURFACE SANDING PATH PLANNING METHOD AND APPARATUS, AND DEVICE AND MEDIUM**

(30) Priority: 20.04.2020 CN 202010309247
(71) Applicant: Guangdong Bright Dream Robotics Co., Ltd., Foshan, Guangdong 528311 (CN)
(72) Inventor: YUAN, Haonan, Foshan, Guangdong 528311 (CN); CHEN, Hangying, Foshan, Guangdong 528311 (CN); CAO, Guo, Foshan, Guangdong 528311 (CN); SHU, Yuan, Foshan, Guangdong 528311 (CN); LIU, Moulin, Foshan, Guangdong 528311 (CN); HE, Suyun, Foshan, Guangdong 528311 (CN); ZHANG, Tongxin, Foshan, Guangdong 528311 (CN); TAO, Zhicheng, Foshan, Guangdong 528311 (CN)
(74) Representative: Arnold & Siedsma
(86) International application number: PCT/CN2020/124131
(87) International publication number: WO 2021/212788

(57) **Abstract**

Embodiments of the present disclosure disclose a method and device for planning a wall surface polishing path, an apparatus and medium. The method includes: obtaining protruding points of a wall surface to be polished, and dividing the wall surface to be polished into at least two regions; determining a candidate protruding point in the next region of the region where a current protruding point is located; comparing, if the region where the current protruding point is located includes an untraversed protruding point, a first distance between the untraversed protruding point and the current protruding point, with a second distance between the candidate protruding point and the current protruding point; determining the protruding point corresponding to a minimum distance in the first distance and the second distance as a next operation point of the current protruding point; and determining the wall surface polishing path based on the current protruding point and the next operation point of the current protruding point. The technical solution in the embodiments of the present disclosure solves the problem that a polishing path of a current polishing device covers a region with no need for polishing, and achieves effects of optimizing an operation path of a polishing device, improving polishing efficiency, and reducing polishing costs.

## Description

### CROSS-REFERENCE TO RELATED APPLICATIONS

The present disclosure claims priority from a Chinese patent application No. 202010309247.7, filed on April 20, 2020, and entitled "METHOD AND DEVICE FOR PLANNING WALL SURFACE POLISHING PATH, APPARATUS AND MEDIUM", the content of which is incorporated herein in its entirety by reference.

### TECHNICAL FIELD

Embodiments of the present disclosure relate to path planning technologies, more particularly, to a method and device for planning a wall surface polishing path, an apparatus and medium.

### BACKGROUND

At this stage, a main structure of a building is generally pouring concrete. A wall needs to be polished before plastering, so that a plastering layer can fully contact the wall, avoiding hollowing or cracking on a wall surface after plastering.

At this stage, a wall surface polishing machine is mainly used to polish wall surfaces, but the machine cannot accurately control a polishing depth, and further needs manual secondary polishing, leading to large labor costs. Moreover, an optimal polishing operation path cannot be guaranteed, and the polishing is inefficient.

### SUMMARY

The embodiments of the present disclosure provide a method and device for planning a wall surface polishing path, an apparatus and medium, so as to achieve effects of optimizing the polishing path and improving the polishing efficiency.

In a first aspect, the embodiments of the present disclosure provide a method for planning a wall surface polishing path, including:
obtaining protruding points of a wall surface to be polished, and dividing the wall surface to be polished into at least two regions;
determining a candidate protruding point in the next region of the region where a current protruding point is located;
comparing, if the region where the current protruding point is located includes an untraversed protruding point, a first distance between the untraversed protruding point and the current protruding point, with a second distance between the candidate protruding point and the current protruding pointing point;
determining the protruding point corresponding to a minimum distance in the first distance and the second distance as a next operation point of the current protruding point; and
determining the wall surface polishing path based on the current protruding point and the next operation point of the current protruding point.

In a second aspect, the embodiments of the present disclosure provide a device for planning a wall surface polishing path, including:
a region division module configured to obtain protruding points of a wall surface to be polished, and divide the wall surface to be polished into at least two regions;
a candidate protruding point determination module configured to determine a candidate protruding point in the next region of the region where a current protruding point is located;
a distance comparison module configured to compare, if the region where the current protruding point is located includes an untraversed protruding point, a first distance between the untraversed protruding point and the current protruding point, with a second distance between the candidate protruding point and the current protruding pointing point;
a next operation point determination module configured to determine the protruding point corresponding to a minimum distance in the first distance and the second distance as a next operation point of the current protruding point; and
a polishing path determination module configured to determine a wall surface polishing path based on the current protruding point and the next operation point of the current protruding point.

In a third aspect, the embodiments of the present disclosure provide an apparatus, including:
one or more processors; and
a storage device configured to store one or more programs,
the one or more programs, when executed by the one or more processors, causing the one or more processors to implement the method for planning the wall surface polishing path described in any one of the embodiments of the present disclosure.

In a fourth aspect, the embodiments of the present disclosure provide a storage medium including computer-executable instructions, the computer-executable instructions are configured to, when executed by a computer processor, perform the method for planning the wall surface polishing path described in any one of the embodiments of the present disclosure.

According to the embodiments of the present disclosure, protruding points of a wall surface to be polished are obtained, and the wall surface to be polished is divided into at least two regions, so as to make it easy to plan a polishing path, reduce a polishing distance taken by a polishing device, and improve the polishing efficiency. A candidate protruding point is determined in the next region of the region where a current protruding point is located; if the region where the current protruding point is located includes an untraversed protruding point, a first distance between the untraversed protruding point and the current protruding point is compared with a second distance between the candidate protruding point and the current protruding point; the protruding point corresponding to a minimum distance in the first distance and the second distance is determined as a next operation point of the current protruding point; and a wall surface polishing path is determined based on the current protruding point and the next operation point of the current protruding point. The planned polishing path includes more protruding points, which reduces the number of times of planning the polishing path, improves the polishing efficiency, solves the problem that a polishing path of a current polishing device covers a region with no need for polishing, and achieves effects of optimizing an operation path of the polishing device, improving the polishing efficiency, and reducing polishing costs.

### BRIEF DESCRIPTION OF THE DRAWINGS

FIG. 1 is a flow diagram illustrating a method for planning a wall surface polishing path according to a first embodiment of the present disclosure;
FIG. 2 is a schematic diagram illustrating regional division of a wall surface;
FIG. 3 is a schematic diagram illustrating a section of a wall;
FIG. 4 is a schematic diagram illustrating a simplified tree of protruding points on the wall surface;
FIG. 5 is a schematic diagram illustrating calculation of candidate protruding points;
FIG. 6 is a flow diagram illustrating a method for planning a wall surface polishing path according to a second embodiment of the present disclosure;
FIG. 7 is a schematic diagram illustrating a judgment grid and a diffusion trend of a protruding point;
FIG. 8 is a schematic diagram illustrating a single-point polishing direction;
FIG. 9 is a flow diagram illustrating a device for planning a wall surface polishing path according to a third embodiment of the present disclosure; and
FIG. 10 is a schematic structural diagram illustrating an apparatus according to a fourth embodiment of the present disclosure.

In the drawings, a reference wall surface is denoted by numeral 1, and a protruding distance of a wall surface protruding point is denoted by numeral 2.

### DETAILED DESCRIPTION OF THE EMBODIMENTS

The present disclosure is described below in further detail with reference to the accompanying drawing and embodiments. It may be understood that specific embodiments described herein are intended only to interpret the present disclosure, rather than limit the present disclosure. In addition, it should also be noted that for ease of description, only some of rather than all of the structures relevant to the present disclosure are shown in the accompanying drawings.

### First Embodiment

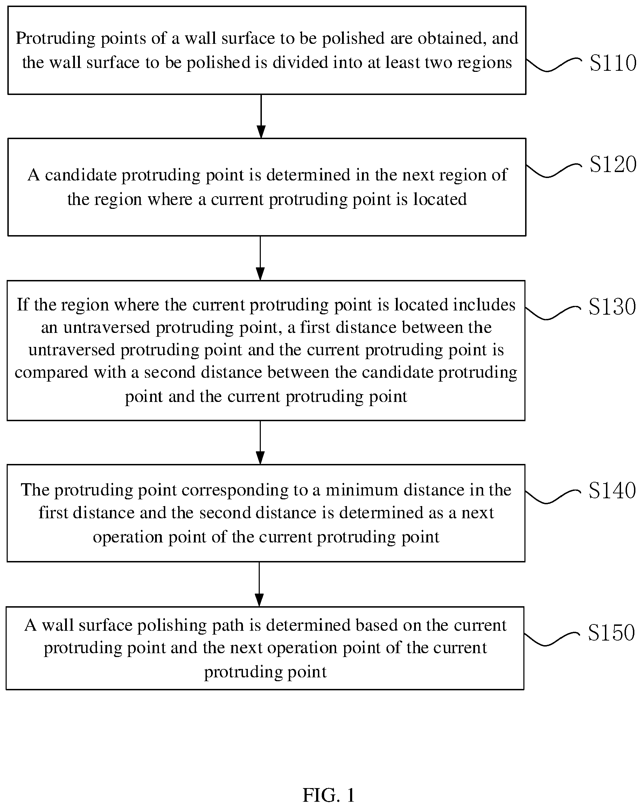

FIG. 1 is a flow diagram illustrating a method for planning a wall surface polishing path according to a first embodiment of the present disclosure. This embodiment is applicable to polishing of wall surface protruding points. The method may be performed by a device for planning a wall surface polishing path, and specifically includes the following steps.

At S110, protruding points of a wall surface to be polished are obtained, and the wall surface to be polished is divided into at least two regions.

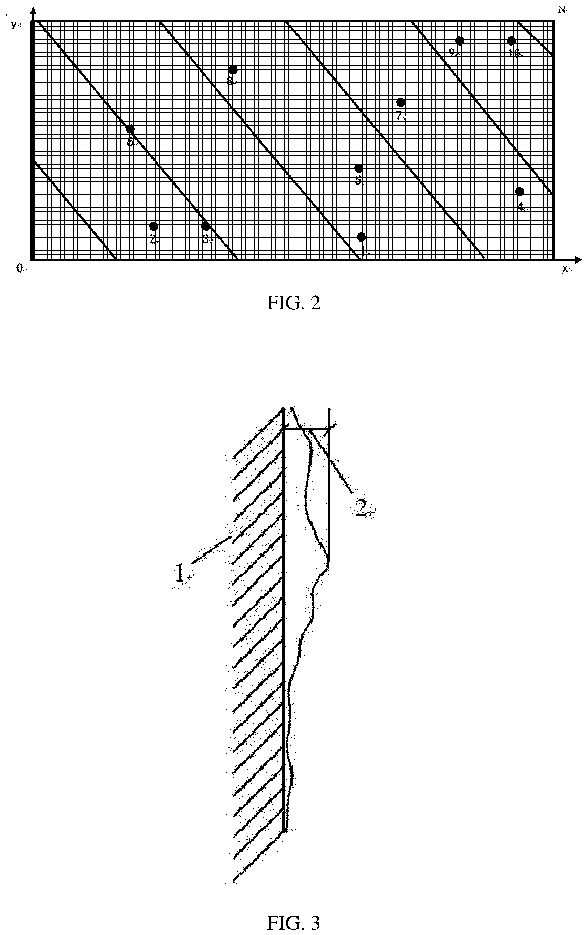

Generally, protruding points that exceed an acceptance standard may appear on a wall surface of a construction building. In this case, the protruding points need to be polished. Before polishing, the wall surface to be polished should be divided into regions according to both a polishing direction and a size of a polishing device so as to plan a polishing path. Optionally, the dividing the wall surface to be polished into at least two regions includes: dividing the wall surface to be polished into the at least two regions according to the size of a polishing device, a width of each region being greater than a diameter of the polishing device. If a width of a region is less than the diameter of the polishing device, the polishing device may polish polishing points in other regions when polishing in the current region, which destroys the planned polishing path. For example, as shown in FIG. 2, the polishing direction of the polishing device may be, but is not limited to, a direction from a lower left corner of the wall surface to be polished to an upper right corner of the wall surface to be polished. The wall surface to be polished is divided into 7 regions according to the polishing direction, and all protruding points are divided into the regions, to facilitate the planning of the polishing path.

Optionally, the obtaining protruding points of the wall surface to be polished includes: obtaining point cloud data of the wall surface to be polished, the point cloud data including parameter information of grid points in the wall surface to be polished; determining, according to the point cloud data, a target wall surface for dividing the protruding point; and determining the target wall surface based on modes of the protruding distances, a distance between the target wall surface and the reference wall surface being the modes of the protruding distances. The protruding point protruding beyond the target wall surface is determined according to the point cloud data and the target wall surface. The point cloud data of the wall surface to be polished is acquired based on a 3D laser scanning technology. Due to a large amount of point cloud data, it is inconvenient to obtain parameter information of protruding points, so the wall surface to be polished is divided into grids. The grids are squares with sides of a preset length. For example, as shown in FIG. 2, the wall surface to be polished is divided into grids each of which has a dimension of 20×20 mm. The protruding points are represented in the form of grids, so that they can be reflected to the wall surface more simply and vividly, and it is convenient to find positions of the protruding points for planning the polishing operation path.

Optionally, the determining, according to the point cloud data, the target wall surface for dividing the protruding point includes: determining, according to the point cloud data, protruding distances between the grid points in the wall surface to be polished and a reference wall surface; and determining the target wall surface based on modes of the protruding distances. A distance between the target wall surface and the reference wall surface is the modes of the protruding distances. As shown in FIG. 3, according to the point cloud data of the whole wall, a unified reference wall surface is selected to calculate a protruding distance between each grid and the reference wall surface. Then, modes of all the protruding distances are selected to determine the target wall surface. The modes of all the protruding distances are the distance between the target wall surface and the reference wall surface. A distance between each grid and the target wall surface is calculated, and a wall surface to be polished corresponding to the grid protruding beyond the target wall surface is taken as a protruding point to be polished. Through the determination of the target wall surface and the calculation of the protruding distances of the protruding points, polishing depths are accurate, so that the polished wall surface is more in line with the acceptance standard, the polishing efficiency is improved, and polishing costs are reduced.

Optionally, the determining the target wall surface based on the modes of the protruding distances includes: determining the target wall surface based on the mode of the maximum protruding distance in the modes; or determining the target wall surface based on the mode of the minimum protruding distance in the modes; or determining the target wall surface based on an average value of the modes. An appropriate mode may be selected according to an actual situation to make the determined target wall surface more in line with the acceptance standard.

At S120, a candidate protruding point is determined in the next region of the region where a current protruding point is located.

It needs to be noted that the candidate protruding point is next protruding point to be polished after the current protruding point is polished by the polishing device. The candidate protruding point in the next region of the region where the current protruding point is located needs to be determined before a polishing path is planned.

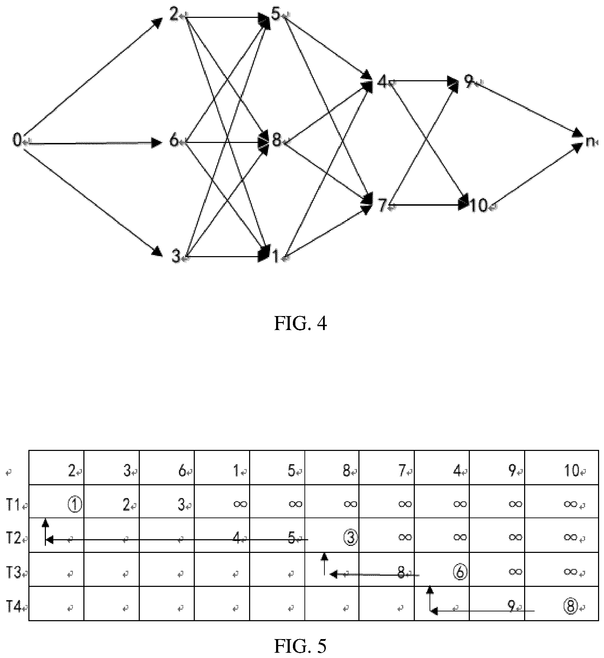

Optionally, the determining the candidate protruding point in the next region of the region where the current protruding point is located includes:
determining, in the next region of the region where the current protruding point is located, the protruding point with the shortest path from a polishing start point in a polishing path as the candidate protruding point. For example, as shown in FIG. 2, for ease of description, the protruding points are numbered according to the rules from bottom left to top right, first horizontal and then vertical. Point 0 is a polishing start point, and Point N is a polishing end point. Coordinates of the protruding points can be obtained by establishing a coordinate system. According to the regions where the protruding points are divided into, positions of the protruding points are simplified into a tree diagram as shown in FIG. 4. It can be seen from the figure that the protruding points in the same region are in the same sequence. According to the coordinates of the protruding points, a distance between each protruding point and the protruding point in the next region is calculated respectively. Candidate protruding points are determined according to a Dijkstra algorithm. Calculation results are shown in FIG. 5. Since the next region of the region where the start point 0 is located includes protruding points numbered 2, 6, and 3, a candidate protruding point is determined from the protruding points numbered 2, 3, and 6. It can be seen from FIG. 5 that a distance between the start point and the protruding point numbered 2 is the shortest, so the protruding point numbered 2 is the candidate protruding point, and then next candidate protruding point after the protruding point numbered 2 is determined. The next region of the region where the protruding point numbered 2 is located includes protruding points numbered 5, 8, and 1. The shortest paths from the start point to the protruding points numbered 5, 8, and 1 are calculated respectively. It can be seen from FIG. 5 that among the protruding points numbered 5, 8, and 1, the protruding point numbered 8 has the shortest path with the start point, so the next candidate protruding point after the protruding point numbered 2 is the protruding point numbered 8, and the process is repeated until a region where an end point is located is found. The determination of the candidate protruding points is a precondition of planning the polishing path, and the polishing path is planned on the basis of the candidate protruding points.

At S130, if the region where the current protruding point is located includes an untraversed protruding point, a first distance between the untraversed protruding point and the current protruding point is compared with a second distance between the candidate protruding point and the current protruding point.

This step is to optimize the polishing candidate points determined in the previous step. Due to the particularity of polishing operation, a single region includes a plurality of protruding points. For example, as shown in FIG. 2, the same region of the protruding point numbered 2 also includes protruding points numbered 3 and 6, the protruding points numbered 3 and 6 are untraversed protruding points, and the point numbered 8 is a candidate point in next region. Distances between the protruding point numbered 2 and the protruding points numbered 3 and 6 are calculated respectively and are compared with a distance between the protruding point numbered 2 and the protruding point numbered 8, so as to determine next operation point.

At S140, the protruding point corresponding to a minimum distance in the first distance and the second distance is determined as a next operation point of the current protruding point.

For example, it may be obtained according to a distance formula between two points that a relation of the distances between the protruding point numbered 2 and the protruding points numbered 8, 3, and 6 is: D_{2→3}>D₂→₆>D₂→₈. Therefore, the next operation point after the protruding point numbered 2 is the protruding point numbered 3. This step is repeated until the end point is reached.

At S150, a wall surface polishing path is determined based on the current protruding point and the next operation point of the current protruding point.

The wall surface polishing path is obtained according to the polishing operation point determined in the above step. The polishing operation point is determined by optimizing the polishing candidate points, so that the wall surface polishing path obtained includes more protruding points, and the polishing device can polish more protruding points during the first polishing, which reduces the number of times of polishing and improve the polishing efficiency.

On the basis of the above embodiment, the method for planning the wall surface polishing path further includes: determining, if the region where the current protruding point is located does not include the untraversed protruding point, the candidate protruding point as the next operation point of the current protruding point. When the polishing path is planned, the region where the current protruding point is located may include no other protruding points except the current protruding point. In this case, the candidate protruding point determined in next region of the region where the current protruding point is located is determined as the next operation point.

On the basis of the above embodiment, the method for planning the wall surface polishing path further includes: determining, based on a preset traversal order, the next region of the region where the current protruding point is located. The traversal order is determined according to a polishing direction. For example, as shown in FIG. 2, the polishing direction is from a lower left corner to an upper right corner, so the protruding points are traversed in order from the lower left corner to the upper right corner. Therefore, if the current region is the region of the protruding point numbered 8, then the next region is a region where the protruding point numbered 7 is located.

On the basis of the above embodiment, the method for planning the wall surface polishing path further includes: determining, when it is determined according to the preset traversal order that there is no next region for the region where the current protruding point is located, the next region of the region where the current protruding point is located based on a reverse order of the preset traversal order. When there is no next region for the region where the current protruding point is located, that is, the polishing end point has been reached, untraversed protruding points may exist in the wall surface to be polished. Therefore, the next region of the region where the current protruding point is located needs to be determined based on the reverse order of the preset traversal order. For example, as shown in FIG. 2, the current region is a region where a protruding point numbered 10 is located, the traversal order is from the lower left corner to the upper right corner, and then the reverse order of the traversal order is from the upper right corner to the lower left corner. According to the reverse order of the traversal order, the next region of the region where the current protruding point is located is determined as a region where a protruding point numbered 4 is located. Protruding points in the next region can be determined only by determining the next region of the region where the current protruding point is located, which lays a foundation for determining the polishing operation point.

According to the technical solution in this embodiment, protruding points of a wall surface to be polished are obtained, and the wall surface to be polished is divided into at least two regions, so as to make it easy to plan a polishing path, reduce a polishing distance taken by a polishing device, and improve the polishing efficiency. A candidate protruding point is determined in the next region of the region where a current protruding point is located; if the region where the current protruding point is located includes an untraversed protruding point, a first distance between the untraversed protruding point and the current protruding point is compared with a second distance between the candidate protruding point and the current protruding point; the protruding point corresponding to a minimum distance in the first distance and the second distance is determined as a next operation point of the current protruding point; and a wall surface polishing path is determined based on the current protruding point and the next operation point of the current protruding point. The planned polishing path includes more protruding points, which reduces the number of times of planning the polishing path, improves the polishing efficiency, solves the problem that a polishing path of a current polishing device covers a region with no need for polishing, and achieves effects of optimizing an operation path of the polishing device, improving the polishing efficiency, and reducing polishing costs.

### Second Embodiment

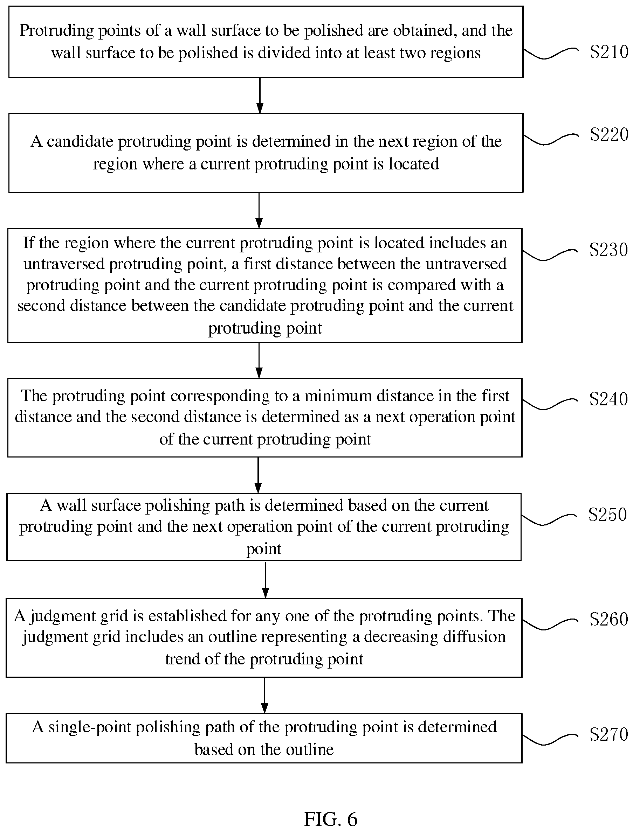

FIG. 6 is a flow diagram illustrating a method for planning a wall surface polishing path according to a second embodiment of the present disclosure. This embodiment provides further optimization on the basis of the above embodiment. Optionally, the method for planning the wall surface polishing path further includes: establishing a judgment grid for any one of the protruding points, the judgment grid including an outline representing a decreasing diffusion trend of the protruding point; and determining a single-point polishing path of the protruding point based on the outline. The decreasing diffusion trend of the protruding point may provide a basis for the judgment of the polishing direction. The single-point polishing path of the protruding point is determined based on the outline, so as to avoid uneven polishing and make the polished wall surface more in line with the acceptance standard. As shown in Fig. 6, the method specifically includes the following steps.

At S210, protruding points of a wall surface to be polished are obtained, and the wall surface to be polished is divided into at least two regions.

At S220, a candidate protruding point is determined in the next region of the region where a current protruding point is located.

At S230, if the region where the current protruding point is located includes an untraversed protruding point, a first distance between the untraversed protruding point and the current protruding point is compared with a second distance between the candidate protruding point and the current protruding point.

At S240, the protruding point corresponding to a minimum distance in the first distance and the second distance is determined as a next operation point of the current protruding point.

At S250, a wall surface polishing path is determined based on the current protruding point and the next operation point of the current protruding point.

At S260, a judgment grid is established for any one of the protruding points. The judgment grid includes an outline representing a decreasing diffusion trend of the protruding point.

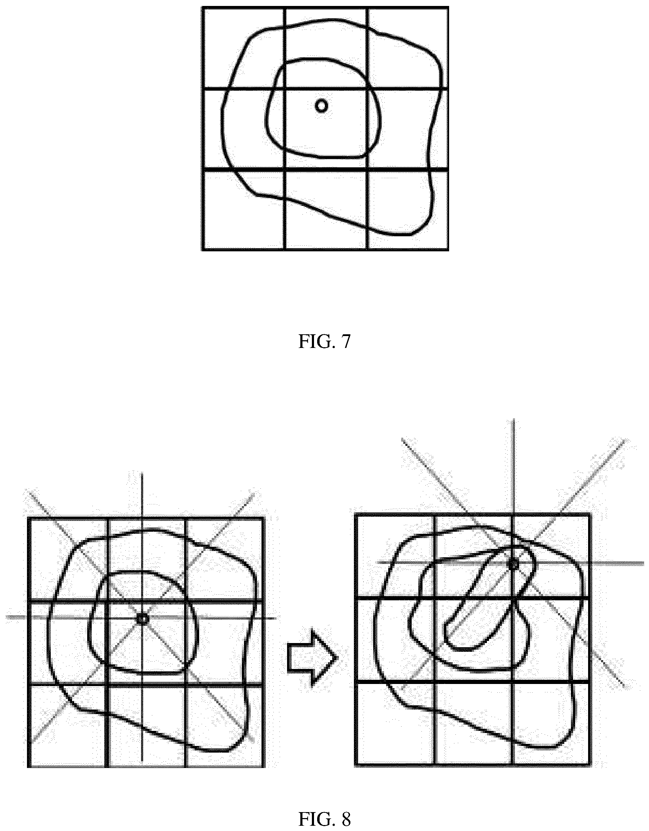

The wall surface to be polished is polished according to the planned polishing path. When a single protruding point is polished, a polishing path of the single protruding point also needs to be determined. As shown in FIG. 7, firstly, a judgment grid is established for the single protruding point, and the entire protruding point is included in the judgment grid; and then a diffusion trend of a protruding height of the protruding point is determined, which is reflected in the form of an outline. For example, the outline may be a contour line. The protruding point generally shows a decreasing diffusion trend. Morphological characteristics of the protruding point can be determined through the diffusion trend, which makes the polishing path planned for the protruding point more accurate.

At S270, a single-point polishing path of the protruding point is determined based on the outline.

The outline of the decreasing diffusion trend of the protruding point provides a basis for planning of the single-point polishing path. Optionally, the determining the single-point polishing path of the protruding point based on the outline includes: determining a direction of a current maximum protrusion of the protruding point according to the outline, and determining a current polishing direction of the protruding point based on the direction of the current maximum protrusion; deleting the current maximum protrusion from the judgment grid, to update the judgment grid, and determining a next polishing direction based on the updated judgment grid. As shown in FIG. 8, a maximum protruding distance of the protruding point is searched for from all directions according to the outline of the decreasing diffusion trend of the single protruding point, so as to find a direction of a maximum protrusion of the protruding point, that is, the polishing direction. The maximum value of the protruding point polished is eliminated, a judgment grid is established again based on a current polishing position, a maximum protrusion is determined based on the new judgment grid, and then a new polishing direction is determined. This process is repeated until the polishing of the region of the protruding point is completed. The polishing path established through the diffusion trend enables the wall surface to be uniformly polished, and makes the polishing depth accurate, so that the polished wall surface is more in line with the acceptance standard.

According to the technical solution in this embodiment, protruding points of a wall surface to be polished are obtained, and the wall surface to be polished is divided into at least two regions, so as to make it easy to plan a polishing path. For a current protruding point, a candidate protruding point in the next region of the region where the current protruding point is located is determined. If the region where the current protruding point is located includes an untraversed protruding point, a first distance between the untraversed protruding point and the current protruding point is compared with a second distance between the candidate protruding point and the current protruding point. The protruding point corresponding to a minimum distance in the first distance and the second distance is determined as a next operation point of the current protruding point. A wall surface polishing path is determined based on the current protruding point and the next operation point of the current protruding point. The planned polishing path includes more protruding points, which reduces the number of times of planning the polishing path. A judgment grid is established for any one of the protruding points, wherein the judgment grid includes an outline representing a decreasing diffusion trend of the protruding point, which provides a basis for judgment of a polishing direction. A single-point polishing path of the protruding point is determined based on the outline, so that the wall surface can be uniformly polished, and the polishing depth is accurate, and the polished wall surface is more in line with the acceptance standard.

### Third Embodiment

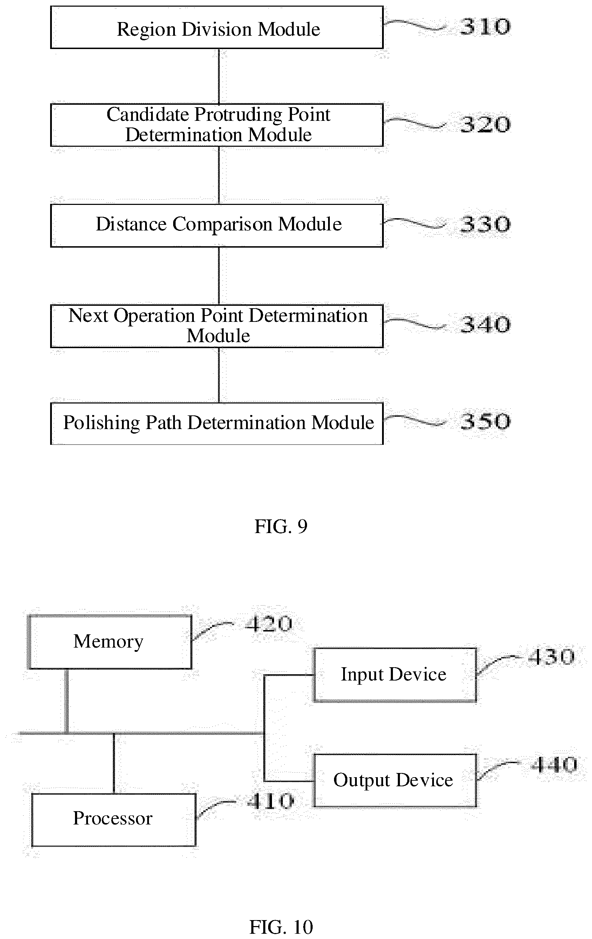

FIG. 9 is a flow diagram illustrating a device for planning a wall surface polishing path according to a third embodiment of the present disclosure. The device includes: a region division module 310, a candidate protruding point determination module 320, a distance comparison module 330, a next operation point determination module 340, and a polishing path determination module 350.

The region division module 310 is configured to obtain protruding points of a wall surface to be polished and divide the wall surface to be polished into at least two regions. The candidate protruding point determination module 320 is configured to determine a candidate protruding point in the next region of the region where a current protruding point is located. The distance comparison module 330 is configured to compare, if the region where the current protruding point is located includes an untraversed protruding point, a first distance between the untraversed protruding point and the current protruding point, with a second distance between the candidate protruding point and the current protruding pointing point. The next operation point determination module 340 is configured to determine the protruding point corresponding to a minimum distance in the first distance and the second distance as a next operation point of the current protruding point. The polishing path determination module 350 is configured to determine a wall surface polishing path based on the current protruding point and the next operation point of the current protruding point.

In the technical solution of the above embodiment, the region division module 310 includes:
a point cloud data obtaining unit configured to obtain point cloud data of the wall surface to be polished, the point cloud data including parameter information of grid points in the wall surface to be polished;
a target wall surface determination unit configured to determine, according to the point cloud data, a target wall surface for dividing the protruding point; and
a protruding point determination unit configured to determine, according to the point cloud data and the target wall surface, the protruding point protruding beyond the target wall surface.

In the technical solution of the above embodiment, the target wall surface determination unit includes:
a protruding distance determination sub-unit configured to determine, according to the point cloud data, protruding distances between the grid points in the wall surface to be polished and a reference wall surface; and
a target wall surface determination sub-unit configured to determine the target wall surface based on modes of the protruding distances, a distance between the target wall surface and the reference wall surface being the modes of the protruding distances.

Optionally, the determining the target wall surface based on the modes of the protruding distances includes: determining the target wall surface based on the mode of the maximum protruding distance in the modes; or determining the target wall surface based on the mode of the minimum protruding distance in the modes; or determining the target wall surface based on an average value of the modes. Optionally, the dividing the wall surface to be polished into the at least two regions includes: dividing the wall surface to be polished into the at least two regions according to a size of a polishing device, a width of each region being greater than a diameter of the polishing device.

Optionally, the determining the candidate protruding point in the next region of the region where the current protruding point is located includes:
determining, in the next region of the region where the current protruding point is located, the protruding point with the shortest path from a polishing start point in a polishing path as the candidate protruding point.

Optionally, if the region where the current protruding point is located does not include the untraversed protruding point, the candidate protruding point determined in the next region of the region where the current protruding point is located is determined as the next operation point of the current protruding point. In the technical solution of the above embodiment, the device for planning the wall surface polishing path further includes:
a next region determination module configured to determine, based on a preset traversal order, the next region of the region where the current protruding point is located; and
a reverse-order next region determination module configured to determine, when it is determined according to the preset traversal order that there is no next region for the region where the current protruding point is located, the next region of the region where the current protruding point is located based on a reverse order of the preset traversal order.

In the technical solution of the above embodiment, the device for planning a wall surface polishing path further includes:
a judgment grid establishment module configured to establish a judgment grid for any one of the protruding points, wherein the judgment grid includes an outline representing a decreasing diffusion trend of the protruding point; and
a single-point polishing path determination module configured to determine a single-point polishing path of the protruding point based on the outline.

In the technical solution of the above embodiment, the single-point polishing path determination module includes:
a polishing direction determination unit configured to determine a direction of a current maximum protrusion of the protruding point according to the outline, and determine a current polishing direction of the protruding point based on the direction of the current maximum protrusion;
a next polishing direction determination unit configured to delete the current maximum protrusion from the judgment grid, to update the judgment grid, and determine next polishing direction based on the updated judgment grid; and
a single-point polishing path determination unit configured to determine the single-point polishing path of the protruding point based on the current polishing direction and the next polishing direction.

According to the technical solution in this embodiment, protruding points of a wall surface to be polished are obtained, and the wall surface to be polished is divided into at least two regions, so as to make it easy to plan a polishing path, reduce a polishing distance taken by a polishing device, and improve the polishing efficiency. A candidate protruding point is determined in the next region of the region where a current protruding point is located; if the region where the current protruding point is located includes an untraversed protruding point, a first distance between the untraversed protruding point and the current protruding point is compared with a second distance between the candidate protruding point and the current protruding point; the protruding point corresponding to a minimum distance in the first distance and the second distance is determined as a next operation point of the current protruding point; and a wall surface polishing path is determined based on the current protruding point and the next operation point of the current protruding point. The planned polishing path includes more protruding points, which reduces the number of times of planning the polishing path, improves the polishing efficiency, solves the problem that a polishing path of a current polishing device covers a region with no need for polishing, and achieves effects of optimizing an operation path of the polishing device, improving the polishing efficiency, and reducing polishing costs.

The device for planning the wall surface polishing path provided in the embodiment of the present disclosure can perform the method for planning the wall surface polishing path provided in any embodiment of the present disclosure, and includes functional modules and beneficial effects corresponding to the performed method.

### Fourth Embodiment

FIG. 10 is a schematic structural diagram illustrating an apparatus according to a fourth embodiment of the present disclosure. As shown in FIG. 10, the apparatus includes a processor 410, a memory 420, an input device 430, and an output device 440. One or more processors 410 may be provided in the device. One processor 410 is taken as an example in FIG. 10. The processor 410, the memory 420, the input device 430, and the output device 440 may be connected through a bus or in other manners, in which the former is taken as an example in FIG. 10.

The memory 420, as a computer-readable storage medium, may be configured to store a software program, a computer-executable program, and a module, for example, program instructions/modules corresponding to the method for planning the wall surface polishing path in the embodiment of the present disclosure (e.g., the region division module 310, the candidate protruding point determination module 320, the distance comparison module 330, the next operation point determination module 340, and the polishing path determination module 350 in the device for planning the wall surface polishing path). The processor 410 executes various functional applications of the apparatus and data processing by running the software program, the instructions, and the module that are stored in the memory 420, that is, implements the above method for planning the wall surface polishing path.

The memory 420 may mainly include a program storage region and a data storage region. The program storage region may store an operating system and an application program required by at least one function. The data storage region may store data created based on use of a terminal, and the like. In addition, the memory 420 may include a high-speed random access memory, and may further include a nonvolatile memory, for example, at least one magnetic disk storage device, a flash memory device, or another volatile solid-state storage device. In some examples, the memory 420 may further include a memory remotely disposed relative to the processor 410. The remote memory may be connected to the device through a network. Examples of the network include, but are not limited to, the Internet, an intranet, a local area network, a mobile communication network, and any combination thereof.

The input device 430 may be configured to receive entered digit or character information, to generate key signal input related to user setting and function control of the device. The output device 440 may include a display device such as a display screen.

### Fifth Embodiment

A fifth embodiment of the present disclosure further provides a storage medium including computer-executable instructions. The computer-executable instructions are configured to, when executed by a computer processor, perform a method for planning a wall surface polishing path. The method includes:
obtaining protruding points of a wall surface to be polished, and dividing the wall surface to be polished into at least two regions;
determining a candidate protruding point in the next region of the region where a current protruding point is located;
comparing, if the region where the current protruding point is located includes an untraversed protruding point, a first distance between the untraversed protruding point and the current protruding point, with a second distance between the candidate protruding point and the current protruding pointing point;
determining the protruding point corresponding to a minimum distance in the first distance and the second distance as a next operation point of the current protruding point; and
determining a wall surface polishing path based on the current protruding point and the next operation point of the current protruding point.

Of course, for a storage medium including computer-executable instructions provided in an embodiment of the present disclosure, computer-executable instructions thereof are not limited to the operations in the method described above, and can also perform related operations in the method provided by any embodiment of the present disclosure.

According to the above description of the embodiments, it should be clear to those skilled in the art that the present disclosure may be implemented by means of software and necessary general hardware, and certainly may be implemented by hardware. In most cases, the former implementation is preferred. Based on such an understanding, the technical solutions in the present disclosure essentially, or the part contributing to the prior art may be implemented in the form of a software product. The computer software product may be stored in a computer-readable storage medium, such as a floppy disk, a read-only memory (ROM), a random access memory (RAM), a flash, a hard disk, or an optical disk of a computer, and includes several instructions that cause a computer device (which may be a personal computer, a server, a network device, etc.) to perform the method described in the embodiments of the present disclosure.

It should be noted that, in the above embodiments of the device for planning the wall surface polishing path, the units and modules included are divided based on functional logic only, but are not limited to the above division provided that corresponding functions can be implemented. In addition, the specific names of the functional units are intended only to distinguish one from another, but are not intended to limit the protection scope of the present disclosure.

It should be noted that the above are merely preferred embodiments of the present disclosure and the technical principles applied therein. Those skilled in the art should understand that the present disclosure is not limited to the specific embodiments described herein, and those skilled in the art can make various obvious changes, re-adjustments, and replacements without departing from the protection scope of the present disclosure. Therefore, although the present disclosure is described in detail through the above embodiments, the present disclosure is not limited to merely the above embodiments, and may further include more other equivalent embodiments without departing from the concept of the present disclosure, and the scope of the present disclosure is defined by the scope of the appended claims.

## Claims

1. A method for planning a wall surface polishing path, comprising:
obtaining protruding points of a wall surface to be polished, and dividing the wall surface to be polished into at least two regions;
determining a candidate protruding point in the next region of the region where a current protruding point is located;
comparing, if the region where the current protruding point is located includes an untraversed protruding point, a first distance between the untraversed protruding point and the current protruding point, with a second distance between the candidate protruding point and the current protruding point;
determining the protruding point corresponding to a minimum distance in the first distance and the second distance as a next operation point of the current protruding point; and
determining the wall surface polishing path based on the current protruding point and the next operation point of the current protruding point.

2. The method according to claim 1, wherein the obtaining the protruding points of the wall surface to be polished includes:
obtaining point cloud data of the wall surface to be polished, wherein the point cloud data includes parameter information of grid points in the wall surface to be polished;
determining, according to the point cloud data, a target wall surface for dividing the protruding point; and
determining, according to the point cloud data and the target wall surface, the protruding point protruding beyond the target wall surface.

3. The method according to claim 2, wherein the determining, according to the point cloud data, the target wall surface for dividing the protruding point includes:
determining, according to the point cloud data, protruding distances between the grid points in the wall surface to be polished and a reference wall surface; and
determining the target wall surface based on modes of the protruding distances, wherein a distance between the target wall surface and the reference wall surface is the modes of the protruding distances.

4. The method according to claim 3, wherein the determining the target wall surface based on the modes of the protruding distances includes:
determining the target wall surface based on the mode of the maximum protruding distance in the modes;
or determining the target wall surface based on the mode of the minimum protruding distance in the modes;
or determining the target wall surface based on an average value of the modes.

5. The method according to claim 1, wherein the dividing the wall surface to be polished into the at least two regions includes:
dividing the wall surface to be polished into the at least two regions according to a size of a polishing device, a width of each region being greater than a diameter of the polishing device.

6. The method according to claim 1, wherein the determining the candidate protruding point in the next region of the region where the current protruding point is located includes:
determining, in the next region of the region where the current protruding point is located, the protruding point with the shortest path from a polishing start point in a polishing path as the candidate protruding point.

7. The method according to claim 1, further comprising:
determining, if the region where the current protruding point is located does not include the untraversed protruding point, the candidate protruding point as the next operation point of the current protruding point.

8. The method according to claim 1, further comprising:
determining, based on a preset traversal order, the next region of the region where the current protruding point is located; and
determining, when it is determined according to the preset traversal order that there is no next region for the region where the current protruding point is located, the next region of the region where the current protruding point is located based on a reverse order of the preset traversal order.

9. The method according to any one of claims 1 to 8, further comprising:
establishing a judgment grid for any one of the protruding points, wherein the judgment grid includes an outline representing a decreasing diffusion trend of the protruding point; and
determining a single-point polishing path of the protruding point based on the outline.

10. The method according to claim 9, wherein the determining the single-point polishing path of the protruding point based on the outline includes:
determining a direction of a current maximum protrusion of the protruding point according to the outline, and determining a current polishing direction of the protruding point based on the direction of the current maximum protrusion;
deleting the current maximum protrusion from the judgment grid, to update the judgment grid, and determining a next polishing direction based on the updated judgment grid; and
determining the single-point polishing path of the protruding point based on the current polishing direction and the next polishing direction.

11. A device for planning a wall surface polishing path, comprising:
a region division module configured to obtain protruding points of a wall surface to be polished, and divide the wall surface to be polished into at least two regions;
a candidate protruding point determination module configured to determine a candidate protruding point in the next region of the region where a current protruding point is located;
a distance comparison module configured to compare, if the region where the current protruding point is located includes an untraversed protruding point, a first distance between the untraversed protruding point and the current protruding point, with a second distance between the candidate protruding point and the current protruding pointing point;
a next operation point determination module configured to determine the protruding point corresponding to a minimum distance in the first distance and the second distance as a next operation point of the current protruding point; and
a polishing path determination module configured to determine the wall surface polishing path based on the current protruding point and the next operation point of the current protruding point.

12. The device according to claim 11, wherein the region division module includes:
a point cloud data obtaining unit configured to obtain point cloud data of the wall surface to be polished, wherein the point cloud data includes parameter information of grid points in the wall surface to be polished;
a target wall surface determination unit configured to determine, according to the point cloud data, a target wall surface for dividing the protruding point; and
a protruding point determination unit configured to determine, according to the point cloud data and the target wall surface, the protruding point protruding beyond the target wall surface.

13. The device according to claim 12, wherein the target wall surface determination unit includes:
a protruding distance determination sub-unit configured to determine, according to the point cloud data, protruding distances between the grid points in the wall surface to be polished and a reference wall surface; and
a target wall surface determination sub-unit configured to determine the target wall surface based on modes of the protruding distances, wherein a distance between the target wall surface and the reference wall surface is the modes of the protruding distances.

14. An apparatus, comprising:
one or more processors; and
a storage device configured to store one or more programs,
wherein the one or more programs, when executed by the one or more processors, cause the one or more processors to implement the method for planning the wall surface polishing path according to any one of claims 1 to 10.

15. A computer-readable storage medium, having a computer program stored therein, wherein the program, when executed by a processor, implements the method for planning the wall surface polishing path according to any one of claims 1 to 10.
